Europäisches Patentamt

European Patent Office

Office européen des brevets

(19)

(11) Veröffentlichungsnummer: **0 255 555**
**B1**

(12)
# EUROPÄISCHE PATENTSCHRIFT

(45) Veröffentlichungstag der Patentschrift:
31.01.90

(51) Int. Cl.⁴: **C13D 1/04, B01D 11/02**

(21) Anmeldenummer: **86110946.0**

(22) Anmeldetag: **02.08.86**

(54) **Vorrichtung zum kontinuierlichen Auslaugen von verfilztem, faserigem Gut, insbesondere von zerkleinertem Zuckerrohr.**

(43) Veröffentlichungstag der Anmeldung:
**10.02.88 Patentblatt 88/6**

(45) Bekanntmachung des Hinweises auf die Patenterteilung:
**31.01.90 Patentblatt 90/5**

(84) Benannte Vertragsstaaten:
**BE DE FR GB**

(56) Entgegenhaltungen:
**BE-A- 681 580**
**FR-A- 2 350 400**

(73) Patentinhaber: **Braunschweigische Maschinenbauanstalt AG, Am Alten Bahnhof 5, D-3300 Braunschweig(DE)**

(72) Erfinder: **Grünewald, Werner, Schlehenweg 11, D-3340 Wolfenbüttel(DE)**

(74) Vertreter: **Döring, Rudolf, Dr.-Ing., Patentanwälte Dr.-Ing. R. Döring Dipl.-Phys. Dr. J. Fricke Josephspitalstrasse 7, D-8000 München 2(DE)**

## Beschreibung

Die Erfindung betrifft eine Vorrichtung zum kontinuierlichen Auslagen von verfilztem, faserigem Gut, insbesondere von zerkleinertem Zuckerrohr, bei der in einem Gehäuse wenigstens zwei übereinander angeordnete Tröge mit feststehenden Siebböden und darüber in Längsrichtung hinweg bewegbaren Mitnehmern vorgesehen sind, welche die an dem einen Ende des oberen Troges zugeführte und am anderen Ende durch freien Fall in den darunter befindlichen Trog überführte Gutschicht in den Trögen gegensinnig bis zum offenen Auslaß des untersten Troges fördern, wobei oberhalb der Gutschicht über den Förderweg verteilt Sprüheinrichtungen und unterhalb der Siebböden getrennte Flüssigkeitssammelräume für die Auslaugeflüssigkeit sowie Rohrleitungen und Pumpen zum Fördern der Auslaugeflüssigkeit nach dem Gegenstromprinzip von dem jeweiligen Flüssigkeitssammelraum zu der Sprüheinrichtung oberhalb des gegen die Förderrichtung der Gutschicht vorgeordneten Flüssigkeitssammelraumes vorgesehen sind.

Es sind Vorrichtungen der genannten Art bekannt (DE-PS 1 567 245; Fig. 8) bei denen zwei Siebtröge übereinander angeordnet und jeweils mit zugeordneten und diese in Längsrichtung umschlingenden angetriebenen Endlosförderern mit daran gehaltenen Mitnehmern ausgerüstet sind. Am Ende der Extraktionszonen des oberen Siebtroges ist eine mit dem Siebboden zusammenwirkende angetriebene Schott- und Druckwalze angeordnet, welche die Gutschicht zusammenpreßt, ehe diese in den Wirkbereich einer von oben in die Gutschicht eingreifenden Schäl- und Schleuderwalze mit radial angeordneten Armen gelangt. Die Schäl- und Schleuderwalze befindet sich am Ende des oberen Troges oberhalb eines von Gehäusewandungen begrenzten Schachtes, in den sie bei gleichzeitigem Rupfvorgang unter Umschichtung das Gut hineinschleudern soll. Der untere Trog mit dem zugehörigen Mitnehmerförderer erstreckt sich bis unter den Schacht und wirkt im Bereich der Umlenkung der Gutschicht aus dem Schacht mit einer von oben auf die Gutschicht drückenden Preßwalze zusammen.

Die bekannte Ausbildung der Vorrichtung ist baulich sehr aufwendig und bedingt eine erhebliche Bauhöhe. Für den Antrieb der Mitnehmerförderer sowie die Druck und die Schälwalzen sind entsprechend hohe Antriebsenergien erforderlich. Die beschriebenen Vorrichtungen sind in der Praxis nur für Großanlagen geeignet.

Der Erfindung liegt die Aufgabe zugrunde, eine Vorrichtung der eingangs genannten Art so auszubilden, daß die Anordnung dicht übereinanderliegender Tröge ermöglicht wird und bei geringem Raum- und Energiebedarf diese Vorrichtung als Kompaktanordnung auch für mittlere und kleinere Anlagen wirtschaftlich verwendbar ist.

Zur Lösung vorstehender Aufgabe kennzeichnet sich die eingangs genannte Vorrichtung erfindungsgemäß dadurch, daß die Mitnehmer sämtlich an einem sich durch alle Tröge erstreckenden, über Umlenk- und Antriebsräder geführten Endlosförderer gehalten sind und jedem Trum des Endlosförderers ein Trog mit Siebboden und Flüssigkeitssammelräumen zugeordnet ist, wobei die Siebböden jeweils in Förderrichtung des Gutes gesehen in einem den freien Fall des Gutes in den nächstunteren Trog gestattenden Abstand vor dem Auflauf des Endlosförderers auf das nächstfolgende Umlenkrad enden und im Ablaufbereich des Endlosförderers von dem Umlenkrad bis unter das Umlenkrad reichen.

Wesentlich bei der vorgenannten Ausbildung ist die Vermeidung von Leertrums des Endlosförderers, welcher erfindungsgemäß bis auf die Umlenkzonen über seine gesamte Länge für den Auslaugevorgang benutzt wird, so daß der sonst für die Leertrums notwendige Freiraum zwischen den Trögen erheblich vermindert werden kann und hierdurch bei Anordnung mehrerer übereinanderliegender Tröge diese einen geringeren Abstand aufweisen können. Bei der neuen Ausbildung der Vorrichtung wird bewußt auf einen Fallschacht für die Überführung des auszulaugenden Gutes von einem Trog in den anderen verzichtet und stattdessen durch entsprechende verkürzte Ausbildung des jeweiligen Troges die Überführung des auszulaugenden Gutes im freien Fall in den jeweils in Förderrichtung nächstfolgenden Siebboden ermöglicht. Durch den natürlichen Abbruch der Gutschicht am Ende des jeweiligen Siebbodens erffolgt eine Art Umbruch bzw. eine Art Umbettung bei gleichzeitiger Auflockerung der Gutschicht, insbesondere wenn darin festere Nester enthalten sein sollten. Dabei erfolgt auch eine Umschichtung bzw. Verteilung der sich in Nähe des vorhergehenden Siebbodens bildenden Feinteilschicht, welche mit zunehmender Stärke wie eine Filterschicht wirkt und sich ungünstig auf die Perkolation auswirkt.

Durch die kompakte Bauweise können die Abmessungen der Vorrichtung sehr klein gehalten werden, wodurch eine geschlossene Bauweise möglich ist, bei der in einem einzigen umschließenden Gehäuse die gesamte Vorrichtung untergebracht wird.

Die innerhalb des Gehäuses von den oberen Trums herunterfallenden Gutteilchen gelangen dabei automatisch auf die von dem darunterliegenden Trum geförderte Gutschicht und werden schließlich mit bis zum Gutausfall weitergefördert.

Die Unterbringung der gesamten Vorrichtung in einem einzigen umschließenden Gehäuse hat den weiteren Vorteil, daß bei der Verwendung von Dampf ebenfalls eine bessere Ausnutzung der Wärme bzw. des Dampfes für den Prozeß erreicht wird, als dies bei herkömmlichen Vorrichtungen erreichbar ist.

Durch die Ausnutzung aller Trums des Endlosförderers wird eine Verminderung des Schleppgewichtes und eine Verringerung der Reibverluste für den Antrieb erzielt.

Die neue Vorrichtung ist nicht nur für das Auslaugen von Zuckerrohr bzw. Zuckerrohrbagasse geeignet, sondern mit ihr können auch andere Substanzen, wie beispielsweise ölhaltige pflanzliche Rohstoffe sowie ggfs. auch zellulosehaltige Rohstoffe, z.B. für die Papierfabrikation, ausgelaugt werden.

Besonders zweckmäßig ist es, wenn die Tröge durch seitliche Wandungen begrenzt sind, welche gleichzeitig auch Teile der seitlichen Gehäusewandungen bilden. Hierdurch ergibt sich eine raumsparende Bauweise, durch die das Herabfallen des Gutes von einem Trog zum anderen weitgehend vermieden wird.

Zweckmäßig ist es, wenn zur Gutzuführung oberhalb des obersten Trums ein Zuführschacht mit einem darin gehaltenen höheneinstellbaren sowie rotierend gegen die Förderrichtung des Gutes antreibbaren Schichtbegrenzer nach Art einer Knüppelwalze vorgesehen ist. Durch den Schichtbegrenzer kann die Höhe der Gutschicht auf dem obersten Trum so eingestellt werden, daß am Ende des Siebtroges der gewünschte natürliche Abbruch der Gutschicht erfolgt, um im freien Fall auf den nächsten Siebtrog zu gelangen, wie dies oben beschrieben ist.

Günstig ist es, wenn bei Anordnung von mehr als zwei übereinanderliegenden Trögen der unterste Trog einen ansteigenden Austragabschnitt mit einem Siebboden und darunter angeordnetem Flüssigkeitssammelraum aufweist. Hierdurch kann eine weitere Ausnutzung des Endlosförderers im Bereich seiner Rückführung zu dem Umlenkrad erfolgen. Gleichzeitig wird eine zusätzliche Zone für die Trennung der Flüssigkeit aus der Gutschicht geschaffen, ehe die Gutschicht aus der Vorrichtung abgeführt wird. Durch den ansteigenden Austragabschnitt wird der Gutaustrag gegenüber dem untersten Siebboden nach oben verlegt. Hierdurch wird die Aufstellung der nachgeordneten Einrichtungen, wie Förderer oder Weiterverarbeitungseinrichtungen, erleichtert, da diese nachfolgenden Einrichtungen nicht gegenüber der Auslaugevorrichtung vertieft angeordnet werden müssen.

Eine besonders günstige Ausbildungsform ergibt sich, wenn das die Vorrichtung umschließende Gehäuse an dem einen Ende höheneinstellbar und an dem anderen Ende um eine horizontale Achse schwenkbar auf einem Trag gestell abgestützt ist. Bei dieser geneigten Anordnung der Vorrichtung können die Flüssigkeitssammelräume einfacher als bei horizontalem Verlauf der Siebböden ausgebildet werden. Während nämlich bei horizontal verlaufenden Siebböden die Flüssigkeitssammelräume als örtlich vertiefte Wannen oder als Wannen mit geneigten Böden ausgebildet werden müssen, um einen sicheren Abzug der Flüssigkeit auch bei geringerem Flüssigkeitsanfall zu gewährleisten, können bei geneigter Anordnung der Vorrichtung die Flüssigkeitssammelräume als rechteckige, quer zu den Siebböden verlaufende Wannen ausgeführt sein, in denen sich automatisch die Flüssigkeit an den jeweils tiefsten Stellen sammelt.

Um die ordnungsgemäße bzw. gewünschte Funktion der Vorrichtung überprüfen bzw. einstellen zu können, empfiehlt es sich, in den seitlichen und oberen Gehäusewandungen Fenster und Klappen zur Kontrolle des Betriebes und für Inspektionszwecke vorzusehen.

Die Zeichnung gibt in schematischer Darstellung Ausführungsbeispiele der Erfindung wieder.

Es zeigen:

Fig. 1 einen Längsschnitt durch eine erfindungsgemäß ausgebildete Vorrichtung,
Fig. 2 die Anordnung nach Fig. 1 zum Betrieb bei geneigter Bauweise,
Fig. 3 einen Längsschnitt durch eine andere Ausführungsform der erfindungsgemäß ausgebildeten Vorrichtung.

Die in den Figuren wiedergebenen Vorrichtungen weisen jeweils ein insgesamt mit 1 bezeichnetes Gehäuse auf, welches bis auf eine Zuführungsöffnung 2 für das auszulaugende Gut und eine Gutausfallöffnung 3 als geschlossenses Gehäuse ausgebildet ist. Jedes der Gehäuse 1 stützt sich über ein Traggestell so auf dem Boden 4 ab, daß zwischen dem Gehäuse 1 und dem Boden 4 eine hinreichende Bodenfreiheit für den Gutausfall verbleibt.

Die Gehäuse 1 sind für die Gutzuführung, welche in Richtung des Pfeiles 5 erfolgt, mit einem nach Art eines Trichters ausgebildeten Zuführschacht 6 ausgerüstet, der die obere Begrenzungswandung des Gehäuses 1 nach oben hin überragt.

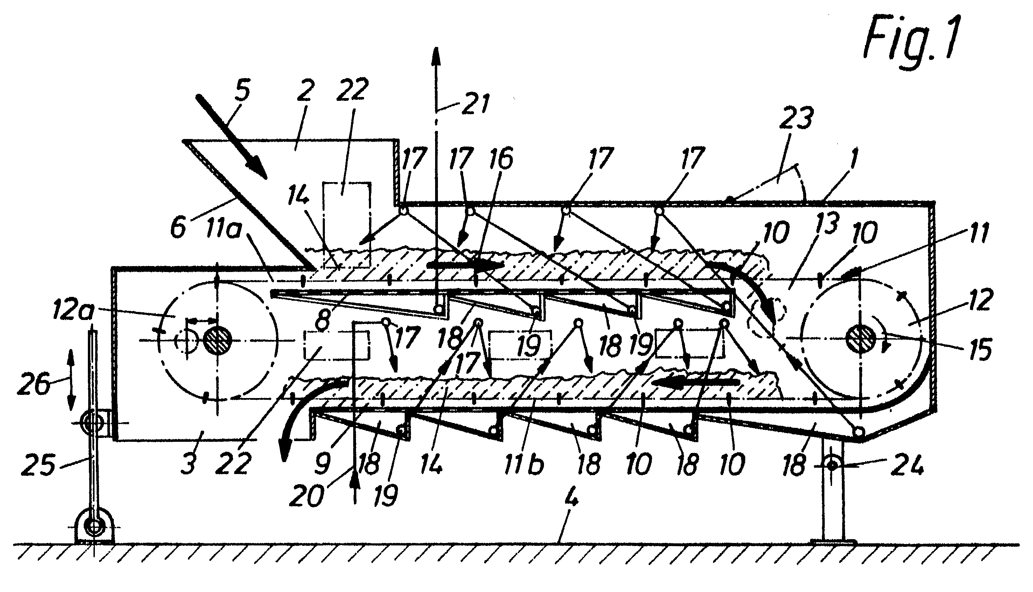

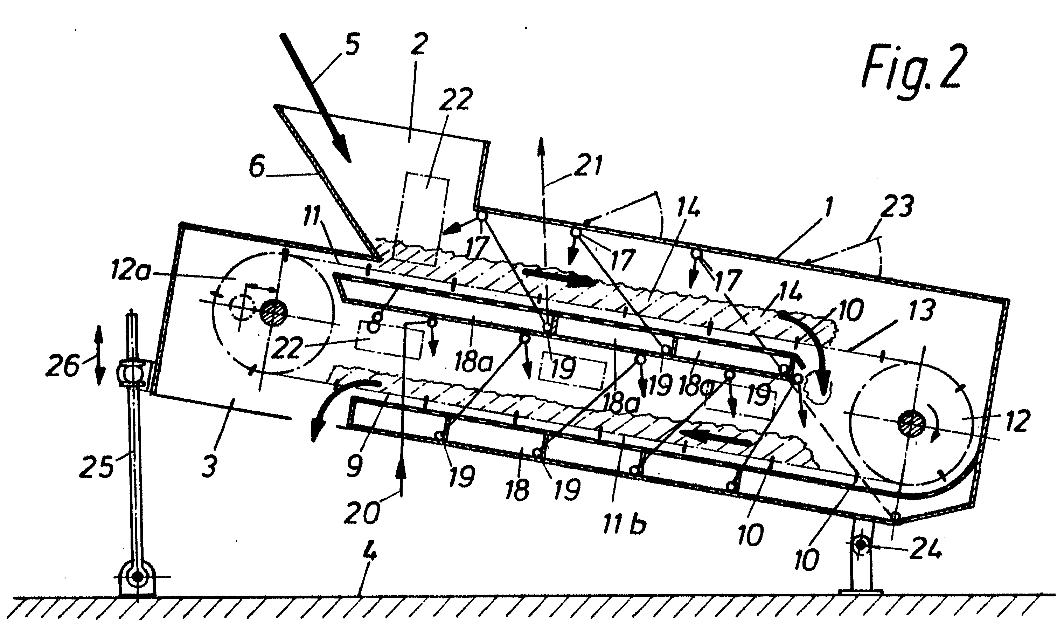

In den Beispielen der Fig. 1 und 2 sind in dem Gehäuse 1 zwei im Abstand übereinander angeordnete Tröge mit Siebböden 8 und 9 vorgesehen, die mit über diesen hinwegbewegten Mitnehmern 10 zusammenwirken, die ihrerseits an einem insgesamt mit 11 bezeichneten Endlosförderer gehalten sind, der aus zwei parallel im Abstand angeordneten Endlosförderketten besteht. Die Endlosförderketten sind um ein Antriebsrad 12 und um ein mit einer Spannvorrichtung zusammenwirkendes Umlenkrad 12a geführt. Der obere Siebboden 8 ist dicht unterhalb des oberen Trums 11a des Endlosförderers und der untere Siebboden 9 dicht unterhalb des unteren Trums 11b des Endlosförderers angeordnet.

Der den oberen Trog nach unten hin begrenzende obere Siebboden 8 erstreckt sich im linken Teil der Figur bis unter den Zuführschacht 6, so daß das durch diesen Zuführschacht zugeführte Gut in Form einer Gutschicht 14 beim Antrieb des Antriebsrades 12 in Richtung des Pfeiles 16 mitgenommen wird.

Der obere Siebboden 8 endet im rechten Teil der Figur in einem solchen Abstand vor dem Antriebsrad 12, daß ein Freiraum 13 verbleibt, durch den das von den Mitnehmern 10 des oberen Trums 11a mitgenommene und über den Siebboden 8 bewegte Gut in diesem Bereich nicht mehr von unten abgestützt wird und auf diese Weise ein natürlicher Abbruch der Gutschicht 14 erfolgt, wie dies für einen gerade im Fall befindlichen Abbruch der Gutschicht dargestellt ist. Das durch den Freiraum 13 fallende Gut gelangt nach dem freien Fall in den unteren Trog mit dem unteren Siebboden 9 und wird dort von den Mitnehmern 10 des unteren Trums 11b des Endlosförderers 11 erfaßt und auf dem unteren Siebboden 9 entlang in Richtung zum Gutauslaß 3 gefördert, wo es ebenfalls wiederum durch freien Fall aus dem Gehäuse 1 abgeführt wird.

Der untere Siebboden 9 ist imrechten Teil der Figur bis unter das gleichzeitig als Umlenkrad wirksame Antriebsrad 12 geführt, so daß das durch den Freiraum 13 fallende Gut mit Sicherheit auf den unteren Siebboden 9 bzw. in den Trog gelangt, der von dem Siebboden 9 und den Seitenwandungen des Gehäuses 11 in dem dargestellten Beispiel gebildet wird.

Oberhalb der auf den Trums 11a und 11b befindlichen Gutschicht 14 sind als Sprührohre ausgebildete Sprüheinrichtungen 17 vorgesehen, über welche die Auslaugeflüssigkeit auf die Gutschicht 14 nach dem Gegenstromprinzip bezogen auf die Förderrichtung der Gutschicht 14 aufgesprüht wird.

Unterhalb der Siebböden 8 und 9 sind voneinander getrennte Flüssigkeitssammelräume 18 vorgesehen, welche in dem dargestellten Beispiel einen geneigten Boden aufweisen und an ihrer tiefsten Stelle mit Sammel- und Entnahmerohren 19 ausgerüstet sind. Die Zufuhr der Auslauge- oder Imbibitionsflüssigkeit erfolgt durch die im linken Teil der Fig. 1 wiedergegebene Zuführleitung 20. Die zugeführte Flüssigkeit wird auf den unmittelbar vor dem Gutauslaß 3 befindlichen Teil der Gutschicht 14 aufgesprüht und gelangt in den unter dieser Gutschicht befindlichen Flüssigkeitssammelraum 18. Aus diesem Flüssigkeitssammelraum wird die Flüssigkeit mittels des Sammel- und Abführrohres 19 abgezogen und über eine in der Zeichnung nicht wiedergegebene Pumpe der gegen die Förderrichtung des Gutes gesehen nächsten Sprüheinrichtung 17 zugeleitet und auf den gegen die Förderrichtung nächsten Abschnitt der Gutschicht 14 aufgesprüht. Die unterhalb dieses Abschnittes in dem Flüssigkeitssammelraum 18 gelangende Flüssigkeit wird dann in der beschriebenen Art weiter zu der nächsten gegen die Förderrichtung des Gutes vorgeordneten Sprüheinrichtung 17 überführt. Dieser Vorgang wiederholt sich nunmehr von Abschnitt zu Abschnitt der Gutschicht 14, wie dies durch die Strömungs- und Sprühpfeile in der Zeichnung angedeutet ist. Die schließlich in den Flüssigkeitssammelraum 18 unterhalb des Zuführschachtes 6 gelangende mit den ausgelaugten Substanzen entsprechend angereicherte Flüssigkeit wird über eine Abführungsleitung 21 abgezogen und der weiteren Verarbeitung zugeleitet.

Um die Arbeitsweise kontrollieren zu können und auch die Schichtstärke der Gutschicht 14 richtig einstellen zu können, damit der natürliche Abbruch dieser Gutschicht im Bereich des Freiraumes 13 erfolgt, sind in den Gehäusewandungen Fenster 22 und oberhalb des Freiraumes 13 eine Klappe 23 vorgesehen.

Die in der Fig. 1 wiedergegebene Anordnung ruht auf einem Gestell, welches an dem einen Ende des Gehäuses eine Verschwenkung des Gehäuses 1 um eine horizontale Achse 24 gestattet. Das andere Ende des Gehäuses ist höheneinstellbar auf Stützen 25 gehalten, so daß das Gehäuse 1 mit allen darin befindlichen Einrichtungen um die horizontale Achse 24 in Richtung des Doppelpfeiles 26 in seiner Höhenlage verändert werden kann, damit das Gehäuse bedarfsweise in gegenüber dem Boden 4 geneigte Positionen überführt werden kann.

Die Fig. 2 zeigt die Anordnung nach Fig. 1 in einer geneigten Position, wobei das mit dem Gutausfall 3 versehene Ende des Gehäuses im Vergleich zu dem gegenüberliegenden Gehäuseende angehoben ist und bezogen auf den Boden 4 eine entsprechende Schräglage einnimmt.

Die in Fig. 2 wiedergegebene Anordnung stimmt bis auf die Ausbildung der Flüssigkeitssammelräume 18 vollständig mit der Anordnung nach Fig. 1 überein.

Durch die Schräglage des Gehäuses 1 können statt der Flüssigkeitssammelräume 18 mit den geneigten Böden Flüssigkeitssammelräume 18a vorgesehen sein, die parallel zu den Siebböden 8 bzw. 9 verlaufende Bodenwandungen aufweisen. Hierdurch ergeben sich im Querschnitt etwa rechteckförmige Flüssigkeitssammelräume 18a, in denen an den in der Betriebsstellung der Vorrichtung tiefsten Stellen die Sammel- und Abführleitungen 19 angeordnet sind.

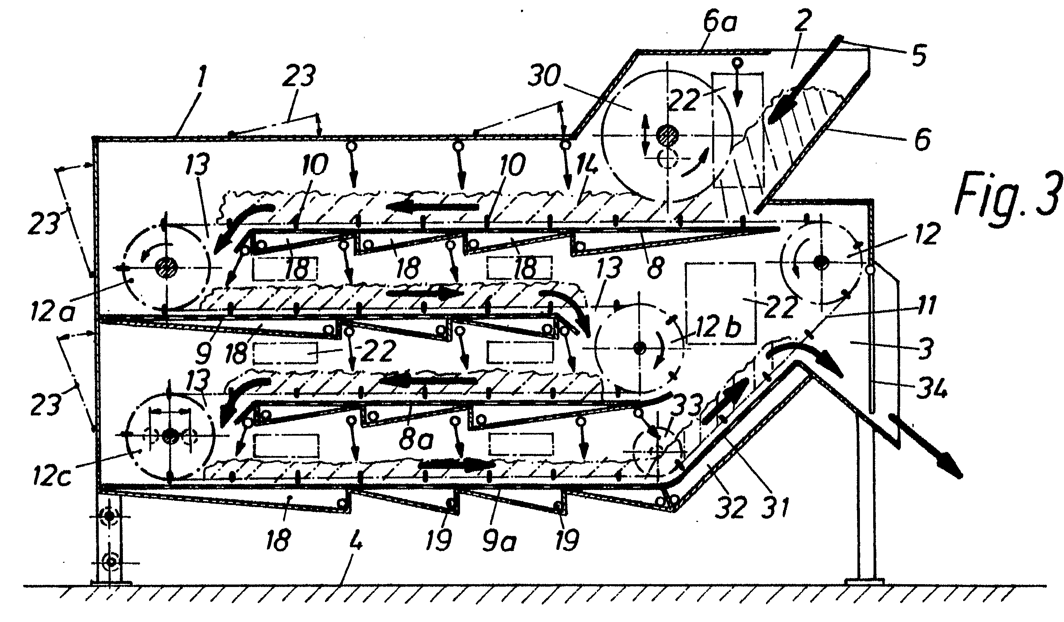

Bei der in Fig. 3 wiedergegebenen Anordnung sind innerhalb des Gehäuses 1 insgesamt vier Tröge mit Siebböden 8 und 9 sowie 8a und 9a vorgesehen, die sämtlich mit einem Endlosförderer 11 zusammenwirken, der mäanderförmig so geführt ist, daß seine Trums zwischen dem Antriebsrad 12 und den Umlenkrädern 12a, 12b und 12c mit ihren zwischen den Endlosketten gehaltenen Mitnehmern 10 auf den Siebböden entlangbewegt werden. Es ist mit anderen Worten jedem Trum des Endlosförderers 11 ein Seibboden zugeordnet.

Die Übergabe des Gutes von Siebboden zu Siebboden erfolgt wie in der beschriebenen Weise durch Freiräume 13, die zwischen dem jeweiligen oberen Siebboden und der Umlenkrolle sowie dem nächstfolgenden unteren Siebboden vorgesehen sind.

Die Anordnung der Flüssigkeitssammelräume 18 unterhalb eines jeden Siebbodens sowie die Anordnung der Sprüheinrichtungen 17 oberhalb der Siebböden entspricht der Ausbildung nach der Fig. 1. Die Führung der Auslaugeflüssigkeit erfolgt nach dem Gegenstromprinzip in der gleichen Weise, wie es für die beiden Siebböden nach der Fig. 1 beschrieben ist, wobei das Gegenstromprinzip über den gesamten Förderweg der Gutschicht 14 beibehalten bleibt. Die mit der Fig. 1 übereinstimmenden Einzelheiten der Anordnung nach Fig. 3 sind in der Fig. 3 mit den aus der Fig. 1 bereits bekannten Bezugszeichen versehen worden.

Bei der Anordnung nach der Fig. 3 ist in dem Zuführschacht 6 ein höheneinstellbarer sowie rotierend gegen die Förderrichtung des Gutes antreibbarer Schichtbegrenzer 30 vorgesehen, der z.B. als Knüppelwalze ausgebildet sein kann. Um ein Herausschleudern des zugeführten Gutes durch den Schichtbegrenzer zu vermeiden, ist der Zuführschacht 6 nach oben hin durch eine Wandung 6a bis auf eine Eintrittsöffnung für das Gut abgedeckt. Durch die Höheneinstellbarkeit des Schichtbegrenzers kann die Gutschicht 14 auf dem obersten Trum des Endlosförderers 11 so eingestellt werden, daß am Ende des obersten Siebbodens 8 der natürliche Abbruch der Schicht im Bereich des Freiraumes 13 erfolgt und das Gut im freien Fall auf den nächstunteren Siebboden gelangt, wie dies im Zusammenhang mit der Fig. 1 bereits beschrieben wurde.

Dieser Vorgang des Abbrechens und Umbrechens des Gutes wiederholt sich bei der Anordnung nach der Fig. 3, bis das Gut auf dem untersten Siebboden 9a angelangt ist.

Der unterste Trog bzw. der unterste Siebboden 9a bildet im Beispiel der Fig. 3 einen ansteigenden Austragabschnitt 31, unter dem ein Flüssigkeitssammelraum 32 angeordnet ist, so daß über eine zusätzliche Wegstrecke eine Trennung der Flüssigkeit von der Gutschicht 14 ermöglicht wird, ehe das ausgelaugte Gut ausgetragen wird. Damit das unterste Trum des Endlosförderers 11a, welches auf dem Siebboden 9a entlanggeführt wird, dem ansteigenden Austragabschnitt 31 des Siebbodens folgen kann, ist eine zusätzliche Umlenkrolle 33 vorgesehen.

Der Gutauslaß 3 ist im Beispiel der Fig. 3 mit einer Schwenkklappe 34 ausgerüstet, durch die bei Verwendung von Dampf ein Austritt des Dampfes und ein Austritt der Wärme zusätzlich vermindert wird.

Die Anordnungen lassen erkennen, daß auf sehr engem Raum Siebflächen einer großen Gesamtlänge untergebracht werden können und eine günstige Ausnutzung des Endlosförderers über seine gesamte Länge erreicht wird.

## Patentansprüche

1. Vorrichtung zum kontinuierlichen Auslaugen von verfilztem, faserigem Gut, insbesondere von zerkleinertem Zuckerrohr, bei der in einem Gehäuse wenigstens zwei übereinander angeordnete Tröge mit feststehenden Siebböden und darüber in Längsrichtung hinweg bewegbaren Mitnehmern vorgesehen sind, welche die an dem einen Ende des oberen Troges zugeführte und am anderen Ende durch freien Fall in den darunter befindlichen Trog überführte Gutschicht in den Trögen gegensinnig bis zum offenen Auslaß des untersten Troges fördern, wobei oberhalb der Gutschicht über den Förderweg verteilt Sprüheinrichtungen und unterhalb der Siebböden getrennte Flüssigkeitssammelräume für die Auslaugeflüssigkeit sowie Rohrleitungen und Pumpen zum Fördern der Auslaugeflüssigkeit nach dem Gegenstromprinzip von dem jeweiligen Flüssigkeitssammelraum zu der Sprüheinrichtung oberhalb des gegen die Förderrichtung der Gutschicht vorgeordneten Flüssigkeitssammelraumes vorgesehen sind, **dadurch gekennzeichnet**, daß die Mitnehmer (10) sämtlich an einem sich durch alle Tröge erstrekkenden, über Umlenk- und Antriebsräder (12 bzw. 12a bis 12c) geführten Endlosförderer (11) gehalten sind und jedem Trum (11a,11b) des Endlosförderers ein Trog mit Siebboden (8,9 bzw. 8a,9a) und Flüssigkeitssammelräumen (18) zugeordnet ist, wobei die Siebböden jeweils in Förderrichtung des Gutes gesehen in einem den freien Fall des Gutes in den nächstunteren Trog gestattenden Abstand vor dem Auflauf des Endlosförderers auf das nächstfolgende Umlenkrad (12a,12b,12c) enden und im Ablaufbereich des Endlosförderers von dem Umlenkrad bis unter das Umlenkrad reichen.

2. Vorrichtung nach Anspruch 1, **dadurch gekennzeichnet**, daß die Tröge durch seitliche Wandungen begrenzt sind, welche gleichzeitig Teile der seitlichen Gehäusewandungen bilden.

3. Vorrichtung nach Anspruch 1 oder 2, **dadurch gekennzeichnet**, daß zur Gutzuführung oberhalb des obersten Trums ein Zuführschacht (6) mit einem darin gehaltenen höheneinstellbaren sowie rotierend gegen die Förderrichtung des Gutes antreibbaren Schichtbegrenzer (30) nach Art einer Knüppelwalze vorgesehen ist.

4. Vorrichtung nach einem der vorhergehenden Ansprüche, **dadurch gekennzeichnet**, daß bei Anordnung von mehr als zwei Trögen der unterste Trog einen ansteigenden Austragabschnitt (31) mit Siebboden und darunter angeordnetem Flüssigkeitsamelraum (32) aufweist.

5. Vorrichtung nach einem der vorhergehenden Ansprüche, **dadurch gekennzeichnet**, daß das Gehäuse (1) an dem einen Ende höheneinstellbar und an dem anderen Ende um eine horizontale Achse (24) schwenkbar auf einem Traggestell abgestützt ist.

6. Vorrichtung nach einem der vorhergehenden Ansprüche, **dadurch gekennzeichnet**, daß in den seitlichen und oberen Gehäusewandungen Fenster (22) und Klappen (23) zur Kontrolle des Betriebes und für Inspektionszwecke vorgesehen sind.

## Claims

1. Apparatus for continuous washing of felted fibrous material, in particular of comminuted sugar cane, wherein in a housing there are provided at least two troughs which are arranged superimposedly and which have fixedly-arranged sieve-like bases and above which there are entrainment members which are movable in the longitudinal direction and which convey the layer of material – which is fed in at one end of the upper trough and which is transferred at the other end by free fall into the trough lying thereunder – in contrary directions in the troughs, to the open outlet of the lowermost trough; there being provided spraying installations distributed over the conveying path above the layer of material, and, below the sieve-like bases, separate fluid-collecting chambers for the washing liquid, and also pipes and pumps for conveying the washing liquid in accordance with the countercurrent principle, from the particular fluid-collecting chamber concerned, to the spraying installation above the fluid-collecting chamber which is arranged therebefore, contrary to the direction in which the layer of material is conveyed, characterised in that the entrainment members (10) are held, as an entirety, on an endless conveyor (11) which extends through all the troughs and which is guided over deflector – and drive – wheels (12 and/or 12a to 12c), and with each conveyor limb (11a, 11b) of the endless conveyor there is associated a trough with a sieve-like base (8, 9 and/or 8a, 9a) and fluid-collecting chambers (18); the sieve-like bases, viewed in each case in the direction of conveying of the material, terminating at a distance such that permits the free fall of the material into the next trough below, before the endless conveyor runs onto the next-succeeding deflector wheel (12, 12b, 12c), and extending in the outlet region of the endless conveyor from the deflector wheel to as far as below the deflector wheel.

2. Apparatus according to claim 1, characterised in that the boundaries of the troughs are constituted by lateral walls which simultaneously form parts of the lateral housing walls.

3. Apparatus according to claim 1 or 2, characterised in that for infeed of the material there is provided above the uppermost conveyor limb a feeding shaft (6) with a layer-limiting means (30) which resembles a billet roll and which is held therein height-adjustably and is rotatingly drivable contrary to the direction of conveying of the material.

4. Apparatus according to any one of the preceding claims, characterised in that in the case of an arrangement of more than two troughs, the lowermost-trough has an ascending discharge section (31) with a sieve-like base and a fluid-collecting chamber (32) arranged thereunder.

5. Apparatus according to any one of the preceding claims, characterised in that the housing (1) is height-adjustable at one end, and at the other end is supported on a support frame in such a manner as to be pivotable about a horizontal axis (24).

6. Apparatus according to any one of the preceding claims, characterised in that in the lateral and upper housing walls, there are provided windows (22) and trapdoors (23) for monitoring the operation and for inspection purposes.

**Revendications**

1. Procédé de lessivage continu de produits feutrés et fibreux, notamment de canne à sucre broyée, dans lequel sont prévus dans un logement au moins deux bacs disposés l'un au-dessus de l'autre et comprenant des fonds à tamis fixes et au-dessus et en direction longitudinale des éléments d'entraînement mobiles, qui acheminent la couche de produit amenée à une extrémité du bac supérieur et transférée à son autre extrémité par chute libre dans le bac se trouvant au-dessous, en sens contraire jusqu'à la sortie ouverte du bac inférieur, des dispositifs de pulvérisation répartis au-dessus de la couche de produit au-dessus du parcours du transport et des espaces collecteurs de liquide séparés au-dessous des fond à tamis étant prévus pour le liquide de lessivage, ainsi que des conduites tubulaires et des pompes qui envoient le liquide de lessivage selon le principe à contre-courant depuis l'espace collecteur de liquide respectif vers le dispositif de pulvérisation situé au-dessus de l'espace collecteur de liquide disposé à l'arrière par rapport à la direction d'avance de la couche de produit, caractérisé en ce que tous les éléments d'entraînement (10) sont montés sur un transporteur sans fin (11) passant dans tous les bacs en étant guidé par des roues de renvoi et d'entraînement (12 ou 12a à 12c), et en ce qu'à chaque brin (11a, 11b) du transporteur sans fin et associé un bac à fond à tamis (8, 9 ou 8a, 9a) et des espaces collecteurs de liquide (18), les fonds à tamis se terminant, vus en direction du transport du produit, à une distance permettant la chute libre du produit dans le bac situé immédiatement au-dessous avant le passage du transporteur sans fin sur la roue de renvoi suivante (12 ou 12a à 12c), et s'étendant dans la région de sortie du transporteur sans fin depuis la roue de renvoi jusqu'au-dessous de cette dernière.

2. Dispositif selon la revendication 1, caractérisé en ce que les bacs sont limités par des parois latérales formant simultanément des parties des parois latérales du logement.

3. Dispositif selon la revendication 1 ou 2, caractérisé en ce que l'on prévoit en vue de l'amenée du produit et au-dessus du brin supérieur une cheminée d'amenée (6) contenant un limiteur de couche entraînable (30) du type à cylindre à billettes pouvant être maintenu de façon réglable en hauteur à l'intérieur et tournant dans le sens contraire au sens de l'avance du produit.

4. Dispositif selon l'une quelconque des revendications précédentes, caractérisé en ce que lorsque l'agencement comprend plus de deux bacs, le bac qui est le plus en bas comprend une section d'évacuation montante (31) avec un fond à tamis et un espace collecteur de liquide (32) disposé au-dessous.

5. Dispositif selon l'une quelconque des revendications précédentes, caractérisé en ce que le logement (1) peut être réglé en hauteur à une extrémité et s'appuie à son autre extrémité de façon pivotante sur un axe horizontal (24) prévu sur un châssis de support.

6. Dispositif selon l'une quelconque des revendications précédentes, caractérisé en ce que sont prévus dans les parois latérales et supérieure du logement des fenêtres (22) et des volets (23) pour le contrôle du fonctionnement et à des fins d'inspection.

Fig.1

EP 0 255 555 B1

Fig.2

Fig. 3